# EUROPEAN PATENT SPECIFICATION

(11) **EP 3 470 221 B1**
(45) Date of publication and mention of the grant of the patent: **07.06.2023**
(21) Application number: 18199586.1
(22) Date of filing: 10.10.2018
(51) Int. Cl.: B32B 5/02, B32B 5/22, B32B 5/24, B32B 5/26, B32B 7/12, B32B 9/02, B32B 25/16, B32B 27/30, B32B 3/06, D04H 1/593, D06M 17/00, D06M 17/04, D06N 7/00

(54) **CARPET WITH WOVEN BACK LAYER**
TEPPICH MIT GEWEBTER RÜCKENSCHICHT
TAPIS COMPORTANT UNE COUCHE ARRIÈRE TISSÉE

(30) Priority: 11.10.2017 BE 201705729
(43) Date of publication of application: 17.04.2019
(73) Proprietor: Osta Carpets NV, 8530 Harelbeke (BE)
(72) Inventor: Claeys, Luc, 8210 Aartrijke (BE)
(74) Representative: De Clercq & Partners

(56) References cited:
- DE-U1- 9 206 299
- US-B1- 6 479 125

## Description

### TECHNICAL FIELD

The present invention relates to a carpet, more specifically to a rug, with a backing layer. The present invention attempts to provide such carpets with suitable aesthetic and physical aspects, including in particular dimensional stability.

### BACKGROUND

Carpets and especially rugs may be provided as a fabric layer or may be prepared as a tufted or a melt-bonded carpet material with a wearing fibre or staple surface from which staple yarns project upwards. In order to ensure good antislip properties, such carpets are usually provided with a backing layer. In general the backing layer has a high filler content (for example limestone) and this is used with various reinforcing materials, such as glass fibres, polyester or combinations thereof, in order to achieve the desired dimensional stability. In general the thermoplastic backing layer comprises one or more layers of polyvinyl chloride.

Important shortcomings of carpets and in particular rugs are, among other things, the use of plastics, limited recyclability, a rather unattractive appearance of the backing layer, and the limited dimensional stability of the carpets - which in exceptional cases was reflected in for example curling-up of the edges of the carpet with varying conditions or incident sunlight.

DE 92 06 299 (U1) relates to a web or layer consisting of at least one layer of felt and/or loden and a fixing surface. An embodiment may comprise a carpet layer, so that the embodiment can be used as floorcovering.

US 6 479 125 B1 relates to tufted carpeting having a primary backing which includes two or three backing components or layers.

The present invention attempts to provide a solution for one or more of the aforementioned problems or shortcomings.

### SUMMARY

For this purpose, the invention provides a method for manufacturing a rug according to Claim 1. Preferred embodiments are covered by the dependent claims.

### DESCRIPTION OF THE FIGURES

The explicit features, advantages and aims of the present invention will become clearer for a person skilled in the art in the technical field of the invention after reading the following detailed description of the embodiment of the invention and the appended figures. The figures are intended to provide further explanation of the invention, but without limiting the scope of the invention.
Fig. 1 is a schematic representation of the structure of a rug according to the present invention.
Fig. 2 is a schematic representation of the edge finishing of rugs according to the present invention.

### DETAILED DESCRIPTION OF THE INVENTION

Unless otherwise defined, all terms that are used in the description of the invention, including technical and scientific terms, have the meaning as is generally understood by a person skilled in the art in the technical field of the invention. For better assessment of the description of the invention, the following terms are explained explicitly.

"A" and "the" refer in this document both to singular and plural unless the context clearly suggests otherwise. For example, "a segment" signifies one or more than one segment.

When "approximately" or "about" is used in this document with a measurable quantity, a parameter, a duration or time point, and the like, this means variations of ± 20% or less, preferably ± 10% or less, more preferably ± 5% or less, even more preferably ± 1% or less, and even more preferably ± 0.1% or less than and from the stated value, in so far as such variations are applicable in the invention that is described. However, it has to be understood that the value of the quantity wherein the term "approximately" or "about" is used, is itself specifically declared.

### Carpet

Disclosed is a rug comprising:
I. a top layer L_{T} manufactured from (i) a fabric W_{T} comprising warp yarns K_{T} and weft yarns I_{T}, and (ii) a pre-coating C_{T} attached to the underside of said fabric W_{T};
II. a backing layer L_{B} manufactured from (i) a fabric W_{B} comprising warp yarns K_{B} and weft yarns I_{B}, and (ii) a pre-coating C_{B} attached to the upper side of said fabric W_{B};
wherein said pre-coating C_{T} is attached to said pre-coating C_{B} by means of an adhesive A.

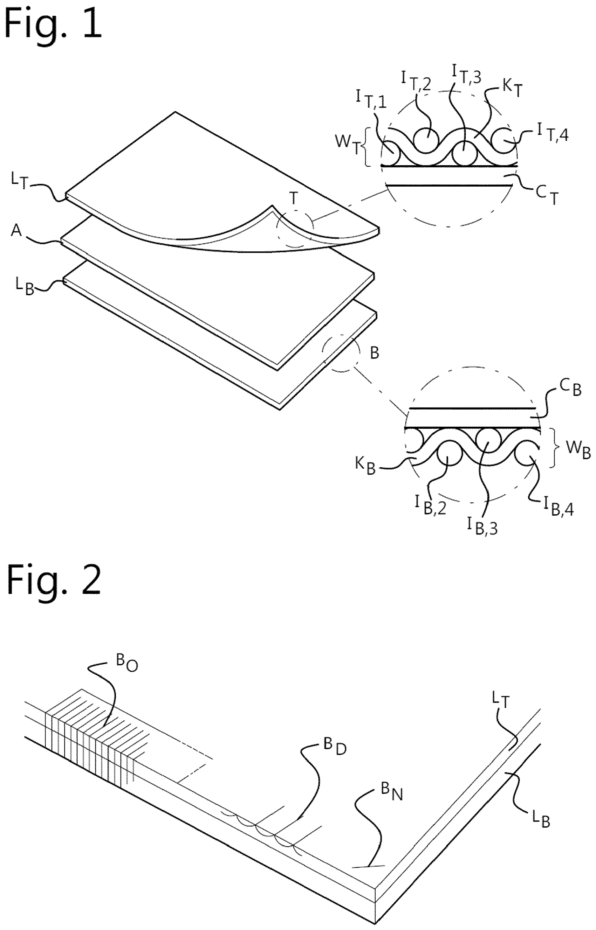

In other words, disclosed is a rug wherein the backing or backing layer is not provided by means of a polymer coating, but by means of a fabric. In comparison with stiffer polymer backings, said fabric causes no or considerably less dimensional instability in the carpet, so that no or less deformation or rolling-up of the edge regions of the carpet is caused. Furthermore, a backing layer according to the embodiment of the present invention offers a more attractive aesthetic appearance, including a more voluminous carpet without an excessive weight of the carpet and sufficient flexibility of the rug. The structure of a rug according to the present invention is shown schematically in Fig. 1.

Such a carpet has the advantage that it is thicker and heavier, which gives a more pleasant feel. As a result, the carpet also stays flatter, even at the edges and corners. The top layer has a better structure, and the whole supplies a more stable substrate. The bottom layer improves the antislip properties. Because there are two pre-coating layers, and an adhesive layer is applied between the top layer and the bottom layer, the material can only heap up in the top layer. The intermediate layers are preferably visually indiscernible, and the carpet looks like it is 1 craft fabric.

The carpet consequently preferably comprises a layered structure with at least two layers of fabric W_{T} and W_{B} therein, with at least 3 distinguishable layers between the at least two layers of fabric, namely a layer of pre-coating C_{T}, a layer of adhesive A and a layer of pre-coating C_{B}. The layers are preferably visually distinguishable, distinguishable using a microscope and/or distinguishable with a chemical and/or physical analysis technique such as a spectroscopic analysis method. Even if one or both of the pre-coatings and adhesive are similar, such layers will be distinguishable, since the prefix "pre-" in pre-coating indicates that the pre-coating took place at a preceding time point relative to the adhesion. As a result, the pre-coating and the adhesive will have hardened at different time points, and this is perceptible by physical and/or chemical means.

In the context of the present invention the term "carpet" is to be understood as a textile product that is suitable as a wall covering or floor covering, and preferably is suitable as a floor covering. A carpet may be knotted, woven, or tufted. The term carpet comprises both flat carpet and pile carpet, preferably a flat carpet (i.e. a carpet without pile). The term carpet comprises both wall-to-wall carpet, fitted carpet and rug; preferably a rug. Mat and floor covering are regarded as synonyms of carpet. A rug may also be used as a wall hanging or tapestry.

In one embodiment said carpet has an area such that a rectangle with a length of 30 cm and a width of 15 cm, preferably a length of 40 cm and a width of 20 cm, more preferably a length of 50 cm and a width of 25 cm, and most preferably a length of 100 cm and a width of 30 cm, can be covered completely by the carpet. In the context of the present invention the term "rug" is to be understood as a single piece of carpet of definite shape. Such carpets can be carried and moved about, and are not intended to be attached to a substrate by means of a bonding agent. Such carpets are usually also characterized by an edge or perimeter finishing, and may be supplied as both rectangular and circular. Preferably said rug is provided with a weight per unit area of between 1000 gsm (gram per square meter) and 4500 gsm, more preferably between 1600 gsm and 3600 gsm, even more preferably between 2000 gsm and 3000 gsm and most preferably with a weight per unit area equal to 2100 gsm, 2200 gsm, 2300 gsm, 2400 gsm, 2500 gsm, 2600 gsm, 2700 gsm, 2800 gsm, 2900 gsm or 3000 gsm, or any value in between. A sufficiently high weight per unit area contributes to good dimensional stability because the edges of the carpet are less inclined to curl up. An excessive weight per unit area is unnecessary for contributing further to good dimensional stability and is less economical of material.

In the context of the present invention the term "wall-to-wall carpet" is to be understood as a carpet whose dimensions are adjusted depending on the space or room in which it is to be fitted. Mostly the fitted carpet covers the whole area of a room or space. Wall-to-wall carpet is mostly cut in situ to adapt to the shape of the room or space. Fitted carpet is in general firmly attached to the substrate or floor, for example with a bonding agent or double-sided adhesive tape. The floor or substrate in a space or room may be covered with several sections of fitted carpet, preferably adjacent sections. Wall-to-wall carpet is a synonym of fitted carpet.

In the context of the present invention the fabrics comprise warp yarns and weft yarns. The fabrics are thus woven and are not non-woven, for example felt.

In the context of the present invention said top layer L_{T} is to be understood as a layer comprising a fabric W_{T}, preferably a thermally stabilized fabric, and a pre-coating C_{T}. Said top layer L_{T} is preferably provided with a weight per unit area of between 800 gsm and 2500 gsm, more preferably between 1000 gsm and 2000 gsm, even more preferably between 1000 gsm and 1800 gsm and most preferably with a weight per unit area equal to 1100 gsm, 1200 gsm, 1300 gsm, 1400 gsm, 1500 gsm, 1600 gsm, 1700 gsm or 1800 gsm, or any value in between. Thermal stabilization of the fabric provides better adhesion. As a result the layers are visually indiscernible, and the carpet looks like it is 1 craft fabric.

In the context of the present invention, said underside of said fabric W_{T} is to be understood as the side located opposite the face of said fabric. The face is the side that can be seen and that provides a desired visual appearance.

In the context of the present invention, said backing layer L_{B} is to be understood as a layer comprising a fabric W_{B}, preferably a thermally stabilized fabric, and a pre-coating C_{B}. Said backing layer L_{B} is preferably provided with a weight per unit area of between 600 gsm and 2000 gsm, more preferably between 700 gsm and 1500 gsm, even more preferably between 700 gsm and 1200 gsm and most preferably with a weight per unit area equal to 700 gsm, 800 gsm, 900 gsm, 1000 gsm, 1100 gsm or 1200 gsm, or any value in between.

In the context of the present invention, said upper side of said fabric W_{B} is to be understood as the side located opposite the face of said fabric. The face is the side that can be seen and that provides a desired visual appearance.

### Fabrics W_{T} and W_{B}

In the context of the present invention said fabric W_{T} preferably mainly comprises natural yarns, for example such as cotton and wool. More preferably said fabric comprises natural yarns to at least 60 wt%, relative to the total weight of said fabric W_{T}, and even more preferably to at least 80 wt%. Synthetic yarns used in said fabric W_{T} are preferably polyester yarns and/or polypropylene yarns. Most preferably said fabric comprises natural yarns to at least 90 wt%, and even more preferably to 100 wt%. Said fabric W_{T} is preferably provided with a weight per unit area of between 600 gsm and 2500 gsm, more preferably between 1000 gsm and 2000 gsm, even more preferably between 800 gsm and 1600 gsm and most preferably with a weight per unit area equal to 900 gsm, 1000 gsm, 1100 gsm, 1200 gsm, 1300 gsm, 1400 gsm, 1500 gsm or 1600 gsm, or any value in between.

Warp yarns K_{T} used in said fabric W_{T} are preferably cotton yarns or cotton-polyester yarns. Said warp yarns K_{T} are preferably provided with a weight per unit area of between 100 gsm and 600 gsm, more preferably between 150 gsm and 500 gsm, even more preferably between 200 gsm and 400 gsm and most preferably with a weight per unit area equal to 200 gsm, 220 gsm, 240 gsm, 260 gsm, 280 gsm, 300 gsm, 320 gsm, 340 gsm, 360 gsm, 380 gsm or 400 gsm, or any value in between. Said warp yarns K_{T} are preferably provided with a thickness from 10 to 100 tex, more preferably from 15 to 50 tex, and even more preferably from 20 to 25 tex. Weft yarns I_{T} used in said fabric W_{T} are preferably natural yarns, preferably cotton and/or wool yarns. Said weft yarns I_{T} are preferably provided with a weight per unit area of between 400 gsm and 2000 gsm, more preferably between 400 gsm and 1500 gsm, even more preferably between 600 gsm and 1200 gsm and most preferably with a weight per unit area equal to 800 gsm, 820 gsm, 840 gsm, 860 gsm, 880 gsm, 900 gsm, 920 gsm, 940 gsm, 960 gsm, 980 gsm or 1000 gsm, or any value in between. Said weft yarns I_{T} are preferably provided with a thickness from 200 to 800 tex, more preferably from 300 to 700 tex, and even more preferably from 350 to 600 tex. Most preferably said weft yarns I_{T} are provided with a thickness of 360 tex, 380 tex, 400 tex, 420 tex, 440 tex, 450 tex or any value in between.

In the context of the present invention said top layer L_{T} is to be understood as a layer comprising a fabric W_{T}, preferably a thermally stabilized fabric, and a pre-coating C_{T}. Said top layer L_{T} is preferably provided with a weight per unit area of between 800 gsm and 2500 gsm, more preferably between 1000 gsm and 2000 gsm, even more preferably between 1000 gsm and 1800 gsm and most preferably with a weight per unit area equal to 1100 gsm, 1200 gsm, 1300 gsm, 1400 gsm, 1500 gsm, 1600 gsm, 1700 gsm or 1800 gsm, or any value in between.

In the context of the present invention said fabric W_{B} preferably mainly comprises natural yarns, for example such as cotton and jute and flax. More preferably said fabric comprises natural yarns to at least 60 wt%, relative to the total weight of said fabric W_{B}, and even more preferably to at least 80 wt%. Synthetic yarns used in said fabric W_{B} are preferably polyester yarns. Most preferably said fabric comprises natural yarns to at least 90 wt%, and even more preferably to 100 wt%. Said fabric W_{B} is preferably provided with a weight per unit area of between 400 gsm and 2000 gsm, more preferably between 600 gsm and 1500 gsm, even more preferably between 700 gsm and 1200 gsm and most preferably with a weight per unit area equal to 700 gsm, 800 gsm, 900 gsm, 1000 gsm, 1100 gsm or 1200 gsm, or any value in between.

Warp yarns K_{B} used in said fabric W_{B} are preferably cotton yarns or cotton-polyester yarns. Said warp yarns K_{B} are preferably provided with a weight per unit area of between 100 gsm and 600 gsm, more preferably between 150 gsm and 500 gsm, even more preferably between 200 gsm and 400 gsm and most preferably with a weight per unit area equal to 200 gsm, 220 gsm, 240 gsm, 260 gsm, 280 gsm, 300 gsm, 320 gsm, 340 gsm, 360 gsm, 380 gsm or 400 gsm, or any value in between. Said warp yarns K_{B} are preferably provided with a thickness from 10 to 100 tex, more preferably from 15 to 50 tex, and even more preferably from 20 to 25 tex. Weft yarns I_{B} used in said fabric W_{B} are preferably natural yarns, preferably jute yarns. Said weft yarns I_{B} are preferably provided with a weight per unit area of between 400 gsm and 1200 gsm, more preferably between 500 gsm and 1000 gsm, even more preferably between 600 gsm and 800 gsm and most preferably with a weight per unit area equal to 600 gsm, 620 gsm, 640 gsm, 660 gsm, 680 gsm, 700 gsm, 720 gsm, 740 gsm, 760 gsm, 780 gsm or 800 gsm, or any value in between. Said weft yarns I_{B} are preferably provided with a thickness from 200 to 800 tex, more preferably from 300 to 700 tex, and even more preferably from 350 to 600 tex. Most preferably said weft yarns I_{B} are provided with a thickness of 360 tex, 380 tex, 400 tex, 420 tex, 440 tex, 450 tex or any value in between.

The top layer is preferably heavier than the bottom layer. The ratio of the top layer to the bottom layer in respect of weight is preferably at least between 1:2 and 4:1, for example between 2:3 and 3:1, preferably between 3:4 and 2:1, preferably between 1:1 and 3:2, and preferably about 4:3.

### Pre-coating C_{T} and C_{B} and adhesive A

In the context of the present invention said pre-coating C_{T} and C_{B} are to be understood as coating layers that are provided in order to provide the respective fabrics W_{T} and W_{B} with better adhesion properties. Said pre-coatings C_{T} and C_{B} are cured at least partially and preferably completely and/or dried at least partially, preferably completely, before the adhesive A is applied. In the context of the present invention said adhesive A is to be understood as a glue. Said pre-coatings C_{T} and C_{B} and said adhesive A may consist of a different material.

In one embodiment, said pre-coatings C_{T} and C_{B} comprise one and the same material, even more preferably said pre-coatings C_{T} and C_{B} comprise one and the same material, and the material of the adhesive differs from the material of pre-coatings C_{T} and C_{B}.

In one embodiment the material composition of said pre-coatings C_{T} and C_{B} is the same, and is different from the material composition of the adhesive A. Suitable materials as pre-coating and/or adhesive comprise latex-type material such as EVA (polyethylene vinyl acetate) or carboxylated styrene-butadienestyrene. These may be applied as pre-coating on one side of said fabrics in order to bond the yarn to the primary backing and to help in fastening the primary backing to the opposite fabric, e.g. backing layer. These may also be applied as adhesive on a dried and stabilized pre-coating for laminating the two fabrics. Latex-type materials such as EVA (polyethylene vinyl acetate) or carboxylated styrene-butadiene-styrene are more preferably used for the pre-coating, and less preferably as adhesive A.

Suitable materials as pre-coating and/or adhesive further comprise curable latex, urethane or vinyl systems, wherein latex systems are commonest. Conventional latex systems are low-viscosity aqueous compositions that are applied at high carpet production speeds and offer good fibre adhesion, tuft bond strength and sufficient flexibility. In general, excess water is led away and the latex is cured in a drying oven or by infrared heating. Styrene-butadiene rubbers (SBR) are the commonest polymers used for latex adhesive material. The latex coating system is typically filled with an inorganic filler such as calcium carbonate or aluminium trihydrate and contains other constituents such as antioxidants, antimicrobial agents, flame retardants, smoke suppressants, moistening agents and foaming agents. Curable latex, urethane or vinyl systems are more preferably used for the pre-coating, and less preferably as adhesive A.

Suitable materials as pre-coating and/or adhesive further comprise thermoplastic polyolefins such as ethylene vinyl acetate (EVA) copolymers and low-density polyethylene (LDPE), owing to their good moisture stability and non-cure requirements. Various methods are available for applying polyolefin coating materials, including powder-coating, melt application and extruded film or varnish lamination. Thermoplastic polyolefins are more preferably used for the adhesive A, and less preferably as pre-coating.

Suitable materials as pre-coating and/or adhesive further comprise hot-melts. A person skilled in the art will recognize the many different hot-melts that are applicable in the manufacture of carpet materials, on the basis of the guidelines given herein. Preferred hot-melts are esters of polyethylene terephthalate (PET) and a modifying polymer. Other preferred hot-melts are esters of polyethylene naphthalate (PEN) and a modifying polymer. The modifying polymer may for example be selected from the group comprising polyethylene glycol, diethylene glycol, trimethylolpropane, phthalic anhydride, adipic acid and combinations or mixtures thereof. In addition, esterification catalysts may be added to the mixture in order to promote esterification of the modifying polymers and transesterification with PET and PEN. For example, a mixture of 3.63 wt% polyethylene glycol, 1.82 wt% diethylene glycol, 17.20 wt% trimethylolpropane, 12.29 wt% adipic acid, 0.08 wt% esterification catalyst, 0.02 wt% TPT esterification catalyst and 64.96 wt% PET is a preferred mixture of modifying polymers, PET and esterification catalysts that may be used as a hot-melt. Another preferred modified PET hot-melt would comprise PET and a combination of oleic acid, adipic acid, trimethylolpropane, PEG, diethylene glycol, esterification catalyst, and hydroquinone (an antioxidant). Other suitable hot-melts prepared from modified PET and PEN are described in US 7,157,139. Hot-melts are more preferably used for the adhesive A, and less preferably as pre-coating.

In some embodiments the pre-coatings CT and CB comprise latex-type material and the adhesive comprises a thermoplastic polyolefin.

In some embodiments the pre-coatings CT and CB comprise latex-type material and the adhesive comprises a hot-melt.

In some embodiments the pre-coatings CT and CB comprise curable latex, urethane or vinyl systems and the adhesive comprises a thermoplastic polyolefin.

In some embodiments the pre-coatings CT and CB comprise curable latex, urethane or vinyl systems and the adhesive comprises a hot-melt.

Pre-coatings C_{T} and C_{B} and adhesive A may be mixed with additives in order to endow the finished carpet with extra favourable properties. Applicable additions comprise, but are not limited to, fire retardants, fillers such as magnetite and other fillers, oxidation stabilizers, antibacterial agents, antimicrobial agents, antifungal agents, UV-stabilizers and combinations or mixtures thereof. A person skilled in the art will recognize other applicable additives that may optionally be added to the pre-coating and/or adhesive, in accordance with the guidelines given herein.

In one embodiment said adhesive is a solid substance, a mixture of solid substances, a liquid, a mixture of liquids or a mixture of solid substance(s) and liquid(s) before and/or during application. In one embodiment said adhesive A is a powder before and/or during application. Said powder may form a distinguishable layer during the curing, solidification, reaction and/or drying of the adhesive.

In one embodiment said pre-coating C_{T} or C_{B} is a solid substance, a mixture of solid substances, a liquid, a mixture of liquids or a mixture of solid substance(s) and liquid(s) before and/or during application. In one embodiment said pre-coating C_{T} or C_{B} is a liquid before and/or during application. Said liquid may form a distinguishable layer during the curing, solidification, reaction and/or drying of the pre-coating.

An adhesive A may differ both chemically and physically, before application, during application, after application and/or after curing, solidification, reaction and/or drying. This is because at any time during the production process of said carpets, the adhesive or various components in the adhesive may react with each other, or may react because of external stimuli, for example such as temperature, light or radiation.

A pre-coating may differ both chemically and physically, before application, during application, after application and/or after curing, solidification, reaction and/or drying. This is because at any time during the production process of said carpets the pre-coatings or various components in the pre-coating may react with each other, or may react because of external stimuli, for example such as temperature, light or radiation.

In one embodiment:
- said pre-coatings C_{T} and C_{B} comprise a latex, urethane or vinyl system as described herein, preferably a latex system; and
- said adhesive comprises a hot-melt, as described herein.

In one embodiment:
- said pre-coatings C_{T} and C_{B} comprise styrene-butadiene latex; and
- said adhesive comprises a hot-melt, as described herein.

In some embodiments a pre-coating C_{T} is applied on the top layer of at least 10 and at most 350 g/m², preferably at least 25 and at most 300 g/m², preferably at least 50 and at most 250 g/m², preferably at least 100 and at most 200 g/m², and preferably about 150 g/m².

In some embodiments a pre-coating C_{B} is applied on the backing layer of at least 10 and at most 350 g/m², preferably at least 25 and at most 300 g/m², preferably at least 50 and at most 250 g/m², preferably at least 100 and at most 200 g/m², and preferably about 150 g/m².

In some embodiments a pre-coating C_{T} is applied on the top layer and a pre-coating C_{B} is applied on the backing layer, both of at least 10 and at most 350 g/m², preferably at least 25 and at most 300 g/m², preferably at least 50 and at most 250 g/m², preferably at least 100 and at most 200 g/m², and preferably about 150 g/m².

In some embodiments the adhesive A is applied of at least 10 and at most 300 g/m², preferably at least 20 and at most 250 g/m², preferably at least 40 and at most 200 g/m², preferably at least 50 and at most 150 g/m², and preferably about 100 g/m².

Preferably the pre-coatings are applied each individually with a higher weight than the adhesive.

In some embodiments the pre-coatings C_{T} and C_{B} are applied at a temperature of at least 100°C up to at most 200°C, preferably at least 120°C up to at most 180°C, at least 140°C up to at most 160°C, for example about 150°C.

In some embodiments the adhesive A is applied at a temperature of at least 50°C up to at most 150°C, preferably at least 70°C up to at most 130°C, at least 90°C up to at most 110°C, for example about 100°C. The adhesive is preferably heated briefly and applied between the top and bottom layers. The processing time is preferably just a few seconds.

### Preferred embodiments

In a preferred embodiment the pre-coatings C_{T} and C_{B} are provided with a thickness from 50 gsm to 250 gsm, and wherein the ratio of the thickness of pre-coating C_{T} to the thickness of pre-coating C_{B} is between 3:1 and 1:3. Preferably said pre-coatings C_{T} and C_{B} are provided with a thickness from 75 gsm to 225 gsm, more preferably with a thickness from 100 gsm to 200 gsm, even more preferably with a thickness from 125 gsm to 175 gsm. Most preferably said pre-coatings C_{T} and C_{B} are provided with a thickness of 130 gsm, 140 gsm, 150 gsm, 160 gsm or 170 gsm, or any value in between. A sufficiently thin pre-coating limits any dimensional instabilities that may occur with varying temperatures. The pre-coating should, however, be thick enough to give good adhesion with the respective fabrics as well as provide a good adhesion surface for said adhesive A. More preferably, the ratio of the thickness of pre-coating C_{T} to the thickness of pre-coating C_{B} is between 3:1 and 1:3, and preferably between 5:2 and 2:5, and more preferably between 2:1 and 1:2 and even between 3:2 and 2:3. Most preferably, the ratio of the thickness of pre-coating C_{T} to the thickness of pre-coating C_{B} is 1:1. A sufficiently uniform ratio of said thicknesses of pre-coating C_{T} and pre-coating C_{B} ensures that the expansion of said pre-coating takes place uniformly with varying temperatures, so as not to cause any curling-up of the carpet.

In a preferred embodiment of the present invention said fabric W_{T} and said fabric W_{B} are stabilized by means of thermosetting. Provision of a thermosetting treatment of said fabrics removes internal stresses in said fabrics. As a result, subsequent deformations, for example under the effect of varying temperature, are limited to a large extent or even completely excluded.

In a preferred embodiment said adhesive A is provided with a thickness from 50 gsm to 200 gsm. Said adhesive A is preferably provided with a thickness from 50 gsm to 175 gsm, more preferably with a thickness from 75 gsm to 150 gsm. Most preferably said adhesive A is provided with a thickness of 80 gsm, 90 gsm, 100 gsm, 110 gsm, 120 gsm, 130 gsm, 140 gsm, or any value in between.

In a preferred said fabric W_{T} is manufactured from cotton, wool, polyester, polypropylene, or flax preferably using a Jacquard loom.

In a preferred embodiment said fabric W_{B} is manufactured mainly, or preferably completely, from natural yarns, preferably from a yarn selected from the group comprising jute, cotton and flax, preferably from jute and cotton, preferably using a Jacquard loom.

In a preferred embodiment said fabric W_{T} is further provided with a pile yarn P_{T}, wherein said pile yarn P_{T} is provided on the upper side of said top layer L_{T}. This offers the advantage that an additional aesthetic appearance may be imparted to the carpet.

In a preferred embodiment said top layer L_{T} and said backing layer L_{B} are joined to each other along their respective perimeter by means of an overlock stitch B_{O}. An overlock stitch B_{O} is a combination of a straight stitch and a zigzag stitch. An overlock stitch B_{O} ensures good adhesion between the top layer L_{T} and the backing layer L_{B} along the perimeter of said carpet, and consequently makes it possible to limit the amount of adhesive A necessary for good-quality bonding of the top layer L_{T} and backing layer L_{B}. Said overlock is preferably provided with a density of at least 10 stitches per cm, at least 15 stitches per cm, at least 20 stitches per cm or even at least 25 stitches per cm. A sufficiently high density of said overlock stitches offers the additional advantage that a rough finish of the edges of said top layer L_{T} and said backing layer L_{B} is partly or completely concealed. Preferably said overlock stitch consists of yarn with a thickness from 1000 to 2500 dtex, more preferably from 1400 to 2000 dtex, and even more preferably from 1500 to 1900 dtex. Most preferably, said overlock stitch consists of yarn with a thickness of 1500 dtex, 1600 dtex, 1700 dtex, 1800 dtex or 1900 dtex, or any thickness in between. This offers the advantage that it gives good covering of the underlying edging of said top layer L_{T} and said backing layer L_{B}.

In a preferred embodiment said top layer L_{T} and said backing layer L_{B} are joined to each other along their respective perimeter by means of a blanket stitch B_{D}. A blanket stitch B_{D} offers the advantage that it can easily be applied along the longitudinal periphery of said carpet. This is specifically advantageous in embodiments in which the carpet is provided with pile yarn. Said blanket stitch preferably consists of yarn with a thickness from 1000 to 5000 dtex, more preferably from 2000 to 4000 dtex, and even more preferably from 3000 to 4000 dtex. Most preferably, said overlock stitch consists of yarn with a thickness of 3000 dtex, 3200 dtex, 3400 dtex, 3600 dtex, 3800 dtex or 4000 dtex, or any thickness in between.

In a preferred embodiment said top layer L_{T} and said backing layer L_{B} are joined to each other along their respective perimeter by means of an overlock stitch B_{O} and a blanket stitch B_{D}. This offers the advantage that a visually less attractive overlock stitch B_{O} may partly be masked by means of a blanket stitch B_{D}.

In a preferred embodiment said top layer L_{T} and said backing layer L_{B} are joined to each other along their respective perimeter by means of an overlock stitch B_{O}, a blanket stitch B_{D} and a cross-stitch B_{N}. Said cross-stitch B_{N} is preferably provided at the level of the vertices of said carpet. Said cross-stitch preferably consists of yarn with a thickness from 1000 to 2500 dtex, more preferably from 1400 to 2000 dtex, and even more preferably from 1500 to 1900 dtex. Most preferably, said cross-stitch consists of yarn with a thickness of 1500 dtex, 1600 dtex, 1700 dtex, 1800 dtex or 1900 dtex, or any thickness in between. Said cross-stitch B_{N} is especially suitable for tying-off one or more stitches along the perimeter of said carpet. Fig. 2 is a schematic representation of the edge finishes by means of an overlock stitch B_{O}, a blanket stitch B_{D}, and a cross-stitch B_{N} for a rug according to the present invention.

In the context of the present invention the term "cure" is to be understood as physically or chemically altering the pre-coating or adhesive after application of the pre-coating or adhesive. This may include, among other things, solidification, drying and/or chemical reaction. The prefix "pre" in pre-coating indicates the fact that the pre-coating is already applied before the top layer is applied to the backing layer.

In a preferred embodiment the present invention provides a method wherein said fabric W_{T} and said fabric W_{B} are stabilized by means of thermosetting for application of a pre-coating.

### Example

The invention will now be explained in more detail on the basis of the following example and Figs. 1 and 2, but without being limited thereto.

A first fabric W_{T} is manufactured on a Jacquard from a first chenille yarn I_{T1} with 450 tex and a density of 465 gsm, a second chenille yarn I_{T2} with 450 tex and a density of 235 gsm and a woollen space yarn I_{T3} with 410 tex and a density of 210 gsm as weft yarns and a polyester and two cotton yarns K_{T} with a density of 295 gsm as warp yarns. A fabric W_{T} with a density of 1205 gsm is thus obtained. A bottom side of said fabric W_{T} is provided with a styrene-butadiene latex pre-coating C_{T} with a density of 150 gsm. A top layer L_{T} with a density of 1355 gsm is thus obtained.

A second fabric W_{B} is manufactured on a Jacquard with a jute yarn with 420 tex and a density of 640 gsm as weft yarn I_{B}, and a polyester and two cotton yarns K_{B} with a density of 295 gsm as warp yarns. A fabric W_{T} with a density of 935 gsm is thus obtained. A top side of said fabric W_{B} is provided with a styrene-butadiene latex pre-coating C_{B} with a density of 150 gsm. A backing layer L_{B} with a density of 1085 gsm is thus obtained.

Both fabrics are thermally stabilized to eliminate stresses in the fabrics. Finally a hot-melt adhesive A is applied on the pre-coating C_{T} of said top layer L_{T} with a density of 120 gsm and the whole is laminated on top of pre-coating C_{B} of the backing layer L_{B}. The whole is thermally stabilized again, giving a carpet with a density of 2560 gsm. The carpet is dimensioned by cutting the edges. An overlock stitch B_{O} with a thickness of 1700 dtex is applied with a density of 25 stitches per cm, and then a blanket stitch B_{D} is applied with a thickness of 3500 dtex. The corners of the carpet are finally finished with a cross-stitch B_{N} with a thickness of 1700 dtex.

## Claims

1. A method for manufacturing a rug, comprising the steps of:
I. manufacturing a top layer L_{T} by (i) weaving a fabric W_{T} comprising warp yarns K_{T} and weft yarns I_{T}, (ii) applying a pre-coating C_{T} to the underside of said fabric W_{T}, and (iii) curing said pre-coating C_{T};
II. manufacturing a backing layer L_{B} by (i) weaving a fabric W_{B} comprising warp yarns K_{B} and weft yarns I_{B},; and
III. attaching said top layer L_{T} to said backing layer L_{B} by applying an adhesive A;
**characterized in that**
step II also comprises the steps of:
(ii) applying a pre-coating C_{B} to the upper side of said fabric W_{B}, and (iii) curing said pre-coating C_{B};
**in that**
in step III adhesive A is applied between said at least partially cured pre-coating C_{T} and said at least partially cured pre-coating C_{B};
and **in that**
the material composition of said adhesive A is different from the material composition of pre-coating C_{B} and pre-coating C_{T}.

2. The method according to Claim 1, wherein said pre-coatings C_{T} and C_{B} are provided with a thickness from 50 g/m2 to 250 g/m2 and wherein the ratio of the thickness of pre-coating C_{T} to the thickness of pre-coating C_{B} is between 2:1 and 1:2.

3. The method according to Claim 1 or 2, wherein said pre-coatings C_{T} and C_{B} are provided with a thickness from 100 g/m2 to 200 g/m2 and wherein the ratio of the thickness of pre-coating C_{T} to the thickness of pre-coating C_{B} is 1:1.

4. The method according to at least one of Claims 1 to 3, wherein said fabric W_{T} and said fabric W_{B} are stabilized by means of thermosetting.

5. The method according to at least one of Claims 1 to 4, wherein said adhesive A is provided with a thickness from 50 g/m2 to 200 g/m2.

6. The method according to at least one of Claims 1 to 5, wherein the fabric W_{T} of said top layer L_{T} is manufactured from natural yarns such as cotton and wool using a Jacquard loom.

7. The method according to at least one of Claims 1 to 6, wherein the fabric W_{B} of said backing layer L_{B} is manufactured from natural yarns, preferably from a yarn selected from the group comprising jute and cotton.

8. The method according to at least one of Claims 1 to 7, wherein said fabric W_{T} is further provided with a pile yarn, wherein said pile yarn is provided on the upper side of said top layer L_{T}.

9. The method according to at least one of Claims 1 to 8, wherein said top layer L_{T} and said backing layer L_{B} are joined to each other along their respective perimeter by means of an overlock stitch B_{O}.

10. The method according to at least one of Claims 1 to 9, wherein said top layer L_{T} and said backing layer L_{B} are joined to each other along their respective perimeter by means of a blanket stitch B_{D}.

11. The method according to Claim 9 or 10, wherein said top layer L_{T} and said backing layer L_{B} are joined to each other along their respective perimeter by means of an overlock B_{O} and a blanket stitch B_{D}.

12. The method according to Claim 9 or 11, wherein said overlock stitch B_{O} is provided with a density of at least 15 stitches per cm.

13. The method according to at least one of Claims 1 to 12, wherein the material composition of pre-coatings C_{T} and C_{B} is the same, but is different from the material composition of the adhesive A.

14. The method according to at least one of Claims 1 to 13, wherein said fabric W_{T} and said fabric W_{B} are stabilized by means of thermosetting for application of a pre-coating.

## Patentansprüche

1. Verfahren zum Fertigen eines Teppichs, umfassend die Schritte:
I. Fertigen einer Deckschicht L_{T} durch (i) Weben eines Gewebes W_{T} umfassend Kettfäden K_{T} und Schussfäden I_{T}, (ii) Aufbringen einer Vorbeschichtung C_{T} auf die Unterseite des Gewebes W_{T} und (iii) Härten der Vorbeschichtung C_{T};
II. Fertigen einer Trägerschicht L_{B} durch (i) Weben eines Gewebes W_{B}, umfassend Kettfäden K_{B} und Schussfäden I_{B}; und
III. Anbringen der Deckschicht L_{T} an der Trägerschicht L_{B} durch Auftragen eines Klebstoffs A;
**dadurch gekennzeichnet, dass**
Schritt II auch die folgenden Schritte umfasst:
(ii) Aufbringen einer Vorbeschichtung C_{B} auf die Oberseite des Gewebes W_{B} und (iii) Härten der Vorbeschichtung C_{B};
dadurch, dass
in Schritt III Klebstoff A zwischen der mindestens teilweise gehärteten Vorbeschichtung C_{T} und der mindestens teilweise gehärteten Vorbeschichtung C_{B} aufgebracht wird;
und dadurch, dass
die Materialzusammensetzung des Klebstoffs A sich von der Materialzusammensetzung der Vorbeschichtung C_{B} und der Vorbeschichtung C_{T} unterscheidet.

2. Verfahren nach Anspruch 1, wobei die Vorbeschichtungen C_{T} und C_{B} mit einer Dicke von 50 g/m² bis 250 g/m² bereitgestellt werden und wobei das Verhältnis der Dicke der Vorbeschichtung C_{T} zur Dicke der Vorbeschichtung C_{B} zwischen 2:1 und 1:2 liegt.

3. Verfahren nach Anspruch 1 oder 2, wobei die Vorbeschichtungen C_{T} und C_{B} mit einer Dicke von 100 g/m² bis 200 g/m² bereitgestellt werden und wobei das Verhältnis der Dicke der Vorbeschichtung C_{T} zur Dicke der Vorbeschichtung C_{B} 1:1 beträgt.

4. Verfahren nach mindestens einem der Ansprüche 1 bis 3, wobei das Gewebe W_{T} und das Gewebe W_{B} durch Thermofixieren stabilisiert werden.

5. Verfahren nach mindestens einem der Ansprüche 1 bis 4, wobei der Klebstoff A mit einer Dicke von 50 g/m² bis 200 g/m² bereitgestellt wird.

6. Verfahren nach mindestens einem der Ansprüche 1 bis 5, wobei das Gewebe W_{T} der Deckschicht L_{T} unter Verwendung eines Jacquard-Webstuhls aus natürlichen Garnen wie Baumwolle und Wolle gefertigt wird.

7. Verfahren nach mindestens einem der Ansprüche 1 bis 6, wobei das Gewebe W_{B} der Trägerschicht L_{B} aus natürlichen Garnen gefertigt wird, vorzugsweise aus einem Garn ausgewählt aus der Gruppe, umfassend Jute und Baumwolle.

8. Verfahren nach mindestens einem der Ansprüche 1 bis 7, wobei das Gewebe W_{T} ferner mit einem Florgarn versehen wird, wobei das Florgarn auf der Oberseite der Deckschicht L_{T} bereitgestellt wird.

9. Verfahren nach mindestens einem der Ansprüche 1 bis 8, wobei die Deckschicht L_{T} und die Trägerschicht L_{B} entlang ihres jeweiligen Umfangs mittels einer Overlocknaht B_{O} miteinander verbunden werden.

10. Verfahren nach mindestens einem der Ansprüche 1 bis 9, wobei die Deckschicht L_{T} und die Trägerschicht L_{B} entlang ihres jeweiligen Umfangs mittels einer Rundstichnaht B_{D} miteinander verbunden werden.

11. Verfahren nach mindestens Anspruch 9 oder 10, wobei die Deckschicht L_{T} und die Trägerschicht L_{B} entlang ihres jeweiligen Umfangs mittels einer Overlocknaht B_{O} und einer Rundstichnaht B_{D} miteinander verbunden werden.

12. Verfahren nach Anspruch 9 oder 11, wobei die Overlocknaht B_{O} mit einer Dichte von mindestens 15 Stichen pro cm versehen ist.

13. Verfahren nach mindestens einem der Ansprüche 1 bis 12, wobei die Material zusammensetzung der Vorbeschichtungen C_{T} und C_{B} gleich ist, sich jedoch von der Materialzusammensetzung des Klebstoffs A unterscheidet.

14. Verfahren nach mindestens einem der Ansprüche 1 bis 13, wobei das Gewebe W_{T} und das Gewebe W_{B} durch Thermofixieren stabilisiert werden, um eine Vorbeschichtung aufzubringen.

## Revendications

1. Procédé de fabrication d'un tapis, comprenant les étapes de :
I. fabrication d'une couche du dessus L_{T} par (i) tissage d'un tissu W_{T} comprenant des fils de chaîne K_{T} et des fils de trame I_{T}, (ii) application d'un prérevêtement C_{T} au côté inférieur dudit tissu W_{T}, et (iii) durcissement dudit prérevêtement C_{T} ;
II. fabrication d'une couche de support L_{B} par (i) tissage d'un tissu W_{B} comprenant des fils de chaîne K_{B} et des fils de trame I_{B} ; et
III. fixation de ladite couche du dessus L_{T} à ladite couche de support L_{B} par application d'un adhésif A ;
**caractérisé en ce que**
l'étape II comprend également les étapes de :
(ii) application d'un prérevêtement C_{B} au côté supérieur dudit tissu W_{B}, et (iii) durcissement dudit prérevêtement C_{B} ;
**en ce que**,
à l'étape III, l'adhésif A est appliqué entre ledit prérevêtement C_{T} au moins partiellement durci et ledit prérevêtement C_{B} au moins partiellement durci ;
et **en ce que**
la composition de matière dudit adhésif A est différente de la composition de matière du prérevêtement C_{B} et du prérevêtement C_{T}.

2. Procédé selon la revendication 1, dans lequel lesdits prérevêtements C_{T} et C_{B} sont dotés d'une épaisseur de 50 g/m² à 250 g/m² et dans lequel le rapport entre l'épaisseur du prérevêtement C_{T} et l'épaisseur du prérevêtement C_{B} se situe entre 2:1 et 1:2.

3. Procédé selon la revendication 1 ou 2, dans lequel lesdits prérevêtements C_{T} et C_{B} sont dotés d'une épaisseur de 100 g/m² à 200 g/m² et dans lequel le rapport entre l'épaisseur du prérevêtement C_{T} et l'épaisseur du prérevêtement C_{B} est de 1:1.

4. Procédé selon au moins une des revendications 1 à 3, dans lequel ledit tissu W_{T} et ledit tissu W_{B} sont stabilisés au moyen d'un thermodurcissement.

5. Procédé selon au moins une des revendications 1 à 4, dans lequel ledit adhésif A est doté d'une d'épaisseur de 50 g/m² à 200 g/m².

6. Procédé selon au moins une des revendications 1 à 5, dans lequel le tissu W_{T} de ladite couche du dessus L_{T} est fabriqué à partir de fils naturels tels que du coton et de la laine au moyen d'un métier à tisser Jacquard.

7. Procédé selon au moins une des revendications 1 à 6, dans lequel le tissu W_{B} de ladite couche de support L_{B} est fabriqué à partir de fils naturels, de préférence à partir d'un fil choisi dans le groupe comprenant la jute et le coton.

8. Procédé selon au moins une des revendications 1 à 7, dans lequel ledit tissu W_{T} est en outre doté d'un fil constituant le velours, ledit fil constituant le velours étant disposé sur le côté supérieur de ladite couche du dessus L_{T}.

9. Procédé selon au moins une des revendications 1 à 8, dans lequel ladite couche du dessus L_{T} et ladite couche de support L_{B} sont reliées l'une à l'autre le long de leur périmètre respectif au moyen d'un point de surjet B_{O}.

10. Procédé selon au moins une des revendications 1 à 9, dans lequel ladite couche du dessus L_{T} et ladite couche de support L_{B} sont reliées l'une à l'autre le long de leur périmètre respectif au moyen d'un point de feston B_{D}.

11. Procédé selon la revendication 9 ou 10, dans lequel ladite couche du dessus L_{T} et ladite couche de support L_{B} sont reliées l'une à l'autre le long de leur périmètre respectif au moyen d'un point de surjet B_{O} et d'un point de feston B_{D}.

12. Procédé selon la revendication 9 ou 11, dans lequel ledit point de surjet B_{O} est doté d'une densité d'au moins 15 points par cm.

13. Procédé selon au moins une des revendications 1 à 12, dans lequel la composition de matière des prérevêtements C_{T} et C_{B} est la même, mais est différente de la composition de matière de l'adhésif A.

14. Procédé selon au moins une des revendications 1 à 13, dans lequel ledit tissu W_{T} et ledit tissu W_{B} sont stabilisés au moyen d'un thermodurcissement pour l'application d'un prérevêtement.
